(19) Europäisches Patentamt
European Patent Office
Office européen des brevets

(11) **EP 4 286 111 A1**

(12) **EUROPEAN PATENT APPLICATION**
published in accordance with Art. 153(4) EPC

(43) Date of publication:
**06.12.2023 Bulletin 2023/49**

(21) Application number: **21922977.0**

(22) Date of filing: **18.06.2021**

(51) International Patent Classification (IPC):
**B25J 13/08** $^{(2006.01)}$

(52) Cooperative Patent Classification (CPC):
**B25J 13/08**

(86) International application number:
**PCT/JP2021/023171**

(87) International publication number:
**WO 2022/162969 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.01.2021 PCT/JP2021/002767**

(71) Applicant: **KAWASAKI JUKOGYO KABUSHIKI KAISHA**
**Kobe-shi, Hyogo 650-8670 (JP)**

(72) Inventors:
• **SHITAKA, Takuya**
  **Kobe-shi, Hyogo 650-8670 (JP)**
• **TAKAYAMA, Yuki**
  **Kobe-shi, Hyogo 650-8670 (JP)**
• **ITO. Shinpei**
  **Kobe-shi, Hyogo 650-8670 (JP)**
• **MATSUDA, Kippei**
  **Kobe-shi, Hyogo 650-8670 (JP)**
• **HOMMA, Toshiyuki**
  **Kobe-shi, Hyogo 650-8670 (JP)**

(74) Representative: **Müller-Boré & Partner**
**Patentanwälte PartG mbB**
**Friedenheimer Brücke 21**
**80639 München (DE)**

(54) **ROBOT SYSTEM, MOVEMENT PATH GENERATION DEVICE AND MOVEMENT PATH GENERATION METHOD**

(57) A robot system (100) includes a control device (50) configured or programmed to evaluate a plurality of generated holding posture candidates based on an index including difficulty of interference of at least one of a robot arm (11) or a hand (20) with a surrounding object at a time at which a workpiece (2) is held and generate a movement path (P).

*FIG.11*

START

IMAGE WORKPIECE — S1

GENERATE HOLDING POSTURE CANDIDATES — S2

INTERFERE WITH SURROUNDING OBJECTS ? — S3
YES
NO

EVALUATE HOLDING POSTURES — S4

GENERATE MOVEMENT PATH — S5

END

EP 4 286 111 A1

**Description**

Technical Field

The present disclosure relates to a robot system, a movement path generation device, and a movement path generation method.

Background Art

Conventionally, a technique for generating a movement path for at least one of a robot arm or a hand is known. For example, in Patent Document 1, a plurality of gripping postures of a gripping mechanism and a moving mechanism stored in advance in a database are used to determine whether or not the gripping mechanism collides with a surrounding workpiece or a surrounding structure. When it is determined that the gripping mechanism does not collide with the surrounding workpiece or the surrounding structure, a movement path for gripping the workpiece by the gripping mechanism is generated for a gripping posture determined not to cause a collision.

Prior Art

Patent Document

Patent Document 1: Japanese Patent Laid-Open No. 2016-132086

Summary of the Invention

However, the technique described in Patent Document 1 has room for further improvement. For example, in determining whether or not the gripping mechanism collides with the surrounding workpiece or the surrounding structure, the accuracy of determining whether or not a collision occurs may be decreased due to errors in models obtained by modeling a robot arm, a hand, and a surrounding structure, and errors in the positions and sizes of a three-dimensionally measured workpiece and structure, for example. In this case, when the robot arm or the hand is moved along the movement path generated for the gripping posture determined not to cause a collision, the robot arm or the hand may interfere with the workpiece or the surrounding structure.

The present disclosure is intended to solve the above problems. The present disclosure aims to generate a movement path for at least one of a robot arm or a hand while interference between at least one of the robot arm or the hand and a surrounding object is further reduced or prevented.

A robot system according to the present disclosure includes a hand including a workpiece holder to hold a workpiece, a robot arm to which the hand is attached, an imager to image the workpiece, and a controller. The controller is configured or programmed to generate a plurality of holding posture candidates of at least one of the robot arm or the hand operable to hold the workpiece based on information on the hand with respect to a position of the workpiece imaged by the imager, evaluate the plurality of generated holding posture candidates based on an index including difficulty of interference of at least one of the robot arm or the hand with a surrounding object at a time at which the workpiece is held, and generate a movement path of at least one of the robot arm or the hand for a holding posture selected from among the plurality of evaluated holding posture candidates.

In the robot system according to the first aspect of the present disclosure, the controller evaluates the plurality of generated holding posture candidates based on the index including the difficulty of interference of at least one of the robot arm or the hand with the surrounding object at the time at which the workpiece is held, and thus a holding posture candidate that is less likely to cause interference can be selected from among the holding postures in which the workpiece can be held. Consequently, interference between at least one of the robot arm or the hand and the surrounding object can be further reduced or prevented. Therefore, the movement path of at least one of the robot arm or the hand can be generated while interference between at least one of the robot arm or the hand and the surrounding object is further reduced or prevented.

A movement path generation device according to a second aspect of the present disclosure is for a robot system including a hand including a workpiece holder to hold a workpiece, a robot arm to which the hand is attached, and an imager to image the workpiece, and includes a controller. The controller is configured or programmed to generate a plurality of holding posture candidates of at least one of the robot arm or the hand operable to hold the workpiece based on information on the hand with respect to a position of the workpiece imaged by the imager, evaluate the plurality of generated holding posture candidates based on an index including difficulty of interference of at least one of the robot arm or the hand with a surrounding object at a time at which the workpiece is held, and generate a movement path of at least one of the robot arm or the hand for a holding posture selected from among the plurality of evaluated holding posture candidates.

In the movement path generation device according to the second aspect of the present disclosure, the controller evaluates the plurality of generated holding posture candidates based on the index including the difficulty of interference of at least one of the robot arm or the hand with the surrounding object at the time at which the workpiece is held, and thus a holding posture candidate that is less likely to cause interference can be selected from among the holding postures in which the workpiece can be held. Consequently, interference between at least one of the robot arm or the hand and the surrounding object can be further reduced or prevented. Therefore, the movement path of at least one of the robot arm or the hand can be generated while interference between at least one of the robot arm or the hand and the surrounding object is further reduced or prevented.

A movement path generation method according to a third aspect of the present disclosure includes imaging a workpiece, generating, based on information on a hand including a workpiece holder to hold the workpiece, a plurality of holding posture candidates of at least one of a robot arm or the hand operable to hold the workpiece with respect to a position of the imaged workpiece, evaluating the plurality of generated holding posture candidates based on an index including difficulty of interference of at least one of the robot arm to which the hand is attached or the hand with a surrounding object at a time at which the workpiece is held, and generating a movement path of at least one of the robot arm or the hand for a holding posture selected from among the plurality of evaluated holding posture candidates.

In the movement path generation method according to the third aspect of the present disclosure, the plurality of generated holding posture candidates are evaluated based on the index including the difficulty of interference of at least one of the robot arm to which the hand is attached or the hand with the surrounding object at the time at which the workpiece is held, and thus a holding posture candidate that is less likely to cause interference can be selected from among the holding postures in which the workpiece can be held. Consequently, interference between at least one of the robot arm or the hand and the surrounding object can be further reduced or prevented. Therefore, the movement path of at least one of the robot arm or the hand can be generated while interference between at least one of the robot arm or the hand and the surrounding object is further reduced or prevented.

A robot system according to a fourth aspect of the present disclosure includes a hand including a plurality of workpiece holders to hold a workpiece, a robot arm to which the hand is attached, an imager to image the workpiece, and a controller. The controller is configured or programmed to generate, for each of the plurality of workpiece holders, a plurality of holding posture candidates of at least one of the robot arm or the hand operable to hold the workpiece based on information on the hand with respect to a position of the workpiece imaged by the imager, evaluate the plurality of generated holding posture candidates based on an index including whether or not at least one of the robot arm or the hand interferes with a surrounding object at a time at which the workpiece is held, generate a movement path of at least one of the robot arm or the hand for a holding posture of one workpiece holder of the plurality of workpiece holders selected from among the plurality of evaluated holding posture candidates, cause the one workpiece holder to hold the workpiece along the generated movement path, generate the plurality of holding posture candidates for another workpiece holder of the plurality of workpiece holders after causing the one workpiece holder to hold the workpiece, evaluate the plurality of generated holding posture candidates based on the index including whether or not at least one of the robot arm or the hand interferes with the surrounding object, generate a movement path for a holding posture selected from among the plurality of evaluated holding posture candidates, and cause the another workpiece holder to hold the workpiece along the generated movement path.

In the robot system according to the fourth aspect of the present disclosure, a plurality of workpieces can be continuously picked up by one hand, and thus the movement path of at least one of the robot arm or the hand can be generated while interference between at least one of the robot arm or the hand and the surrounding object is further reduced or prevented, and the time required to move the plurality of workpieces can be reduced.

Brief Description of the Drawings

FIG. 1 is a diagram showing the configuration of a robot system according to a first embodiment.
FIG. 2 is a diagram showing a hand and workpieces.
FIG. 3 is a diagram showing a hand attached to a robot arm.
FIG. 4 is a diagram showing an exchangeable hand different from the hand shown in FIG. 3.
FIG. 5 is a diagram showing the configuration of a control device.
FIGS. 6A, 6B, and 6C are diagrams for illustrating holding posture candidates, and diagrams showing examples of holding a workpiece with a first sucker.
FIGS. 7A, 7B, and 7C are diagrams for illustrating holding posture candidates, and diagrams showing examples of holding a workpiece with a second sucker.
FIGS. 8A and 8B are diagrams for illustrating evaluation of a holding posture with respect to the height position of a flange, FIG. 8A is a diagram showing a case in which the position of the flange is low, and FIG. 8B is a diagram showing a case in which the position of the flange is high.

FIGS. 9A and 9B are diagrams for illustrating evaluation of a holding posture with respect to a distance between the flange and a base, FIG. 9A is a diagram showing a case in which the flange is far from the base, and FIG. 9B is a diagram showing a case in which the flange is close to the base.

FIG. 10 is a diagram for illustrating generation of a movement path.

FIG. 11 is a flowchart for illustrating the operation of the control device.

FIGS. 12A, 12B, 12C, 12D, and 12E are diagrams showing the operation of a control device according to a second embodiment, FIG. 12A is a diagram showing imaging of workpieces, FIG. 12B is a diagram showing generation of holding posture candidates, FIG. 14C is a diagram showing evaluation of the holding posture candidates, FIG. 12D is a diagram showing generation of a movement path for a selected holding posture, and FIG. 12E is a diagram showing a state in which a held workpiece is retracted.

FIG. 13 is a diagram showing a state in which a workpiece held by a first sucker according to the second embodiment is retracted.

FIG. 14 is a diagram for illustrating a model of a workpiece according to the second embodiment.

FIG. 15 is a diagram showing a state in which a workpiece is held by a second sucker according to the second embodiment.

FIG. 16 is a diagram showing a hand according to a modified example.

FIGS. 17A, 17B, 17C, and 17D are diagrams showing the operation of a control device according to a modified example, FIG. 17A is a diagram showing imaging of a workpiece, FIG. 17B is a diagram showing generation of holding posture candidates, FIG. 17C is a diagram showing evaluation of the holding posture candidates, and FIG. 17D is a diagram showing generation of a movement path for a selected holding posture.

Modes for Carrying Out the Invention

First Embodiment

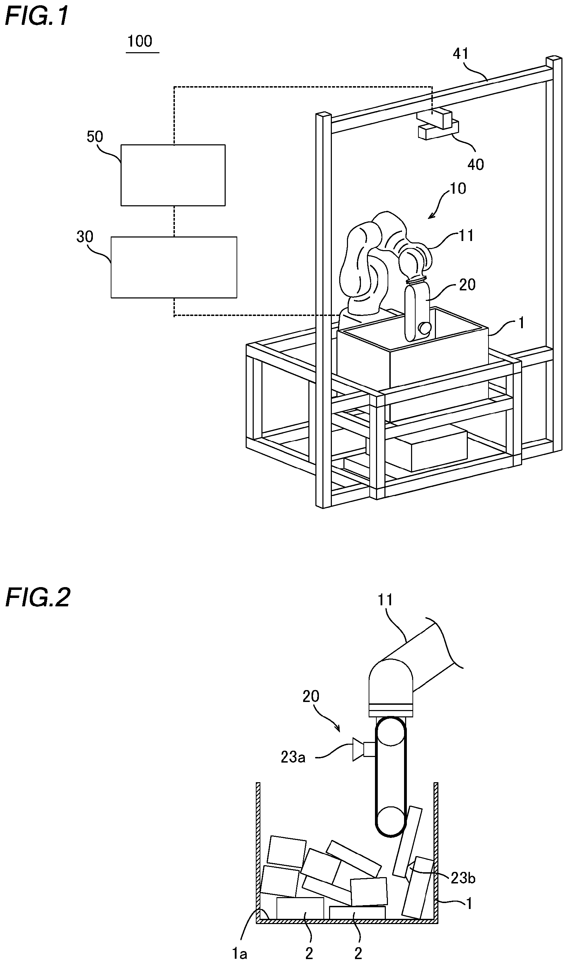

The configuration of a robot system 100 according to a first embodiment is now described with reference to FIGS. 1 to 10. The robot system 100 holds a plurality of workpieces 2 placed in a box 1 and moves a held workpiece 2.

As shown in FIGS. 1 and 2, the robot system 100 includes a robot 10, a robot controller 30, an imager 40, and a control device 50. The control device 50 is an example of a movement path generation device.

The robot 10 includes a robot arm 11. The robot 10 is a vertical articulated robot, for example. A hand 20 is attached to the tip end of the robot arm 11.

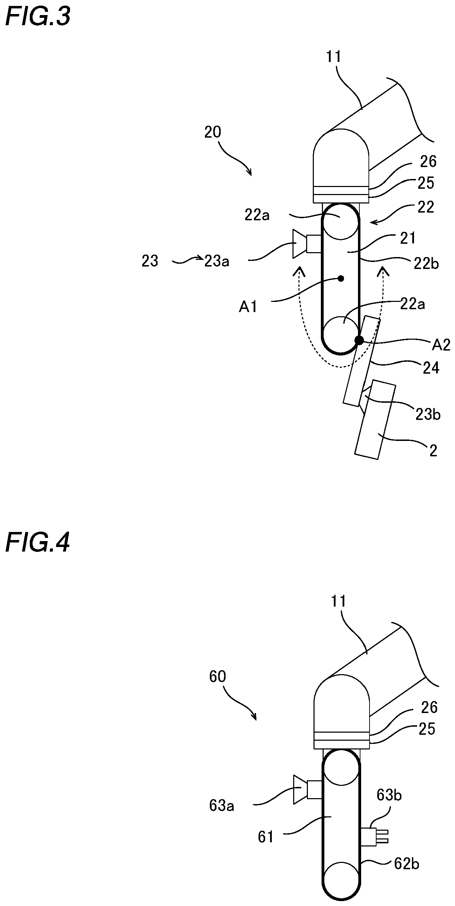

In the first embodiment, as shown in FIG. 3, the hand 20 includes at least one of a deformable configuration including a transfer mechanism 22 or a configuration including a plurality of suckers 23. Specifically, in the first embodiment, the hand 20 includes both the deformable configuration including the transfer mechanism 22 and the configuration including the plurality of suckers 23. The suckers 23 are examples of a workpiece holder.

Specifically, the hand 20 includes a support 21 and the transfer mechanism 22. The support 21 is attached to the tip end of the robot arm 11. The support 21 extends from the tip end of the robot arm 11. The transfer mechanism 22 moves relative to the support 21. The transfer mechanism 22 includes a pair of sprockets 22a and chains 22b wound around the pair of sprockets 22a. The sprockets 22a are rotated by a motor (not shown), and the chains 22b are rotated by rotating the sprockets 22a. The sprockets 22a are also called chain wheels.

The hand 20 includes the plurality of suckers 23. In the first embodiment, the hand 20 includes two suckers 23a and 23b. The suckers 23 include suction pads, for example. Furthermore, the suckers 23 may include magnets, for example. The suckers 23 are attached to the chains 22b and rotate together with the chains 22b relative to the support 21. Two chains 22b are provided so as to correspond to the sucker 23a and the sucker 23b. The sucker 23a is directly attached to the chain 22b. Thus, the position of the sucker 23a in the hand 20 can be changed by rotation of the chain 22b. The sucker 23b is attached to the chain 22b via a link 24. Accordingly, the position of the sucker 23b in the hand 20 can be changed by rotation of the chain 22b and rotation of the link 24. In this manner, the sucker 23a and the sucker 23b move in the hand 20 such that the hand 20 is deformable. The sucker 23a and the sucker 23b are examples of a workpiece holder.

A hand exchange mechanism 25 is provided at the tip end of the robot arm 11. The hand exchange mechanism 25 can exchange the hand 20 for a hand 60 shown in FIG. 4 that is separate from the hand 20.

As shown in FIG. 4, the hand 60 includes a sucker 63a and a gripper 63b, for example. The gripper 63b includes a chuck, for example. The gripper 63b may include a hand having a joint. The sucker 63a and the gripper 63b are attached to a chain 62b. The chain 62b rotates such that the sucker 63a and the gripper 63b move relative to the support 61. The sucker 63a and the gripper 63b are examples of a workpiece holder.

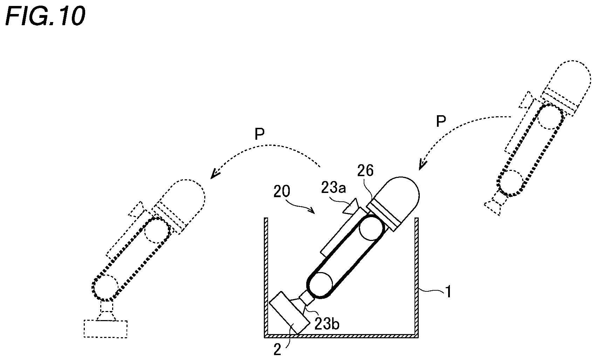

As shown in FIG. 1, the robot controller 30 controls the operation of the robot 10. Specifically, the robot controller 30 receives a movement path P and the like shown in FIG. 10 for operating the robot 10 from the control device 50. The robot controller 30 controls the operation of the robot 10 by driving a drive of the robot 10 based on the received movement path P and the like.

The drive is achieved by a plurality of servomotors, for example. A position sensor such as an encoder that detects the rotational angular position of the servomotor is provided on each servomotor. The rotational angular position is the angular position of each joint in a joint coordinate system of each servomotor. The robot controller 30 controls the positions of the servomotors such that the robot arm 11 takes an arbitrary posture.

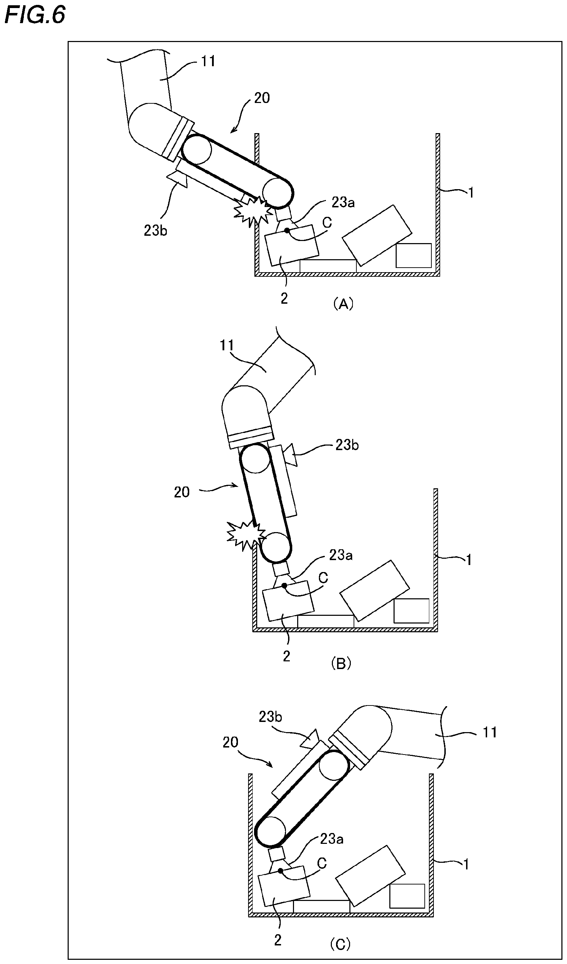

The imager 40 images the workpieces 2. The imager 40 is a three-dimensional camera, for example. The imager 40 calculates the three-dimensional coordinates of the workpieces 2 based on the captured images of the workpieces 2. The three-dimensional coordinates of the workpieces 2 are the coordinates of a center point C on the upper surface of the workpiece 2 shown in FIG. 6, for example. Specifically, the coordinates of the center point C and a vector indicating the direction of a plane containing the center point C are calculated. The imager 40 is arranged above the box 1 in which the workpieces 2 are placed. A frame 41 is provided in order to arrange the imager 40 above the box 1 in which the workpieces 2 are placed.

The control device 50 is provided separately from the robot controller 30. The control device 50 includes a personal computer (PC), for example. The control device 50 receives the three-dimensional coordinates of the workpieces 2 from the imager 40.

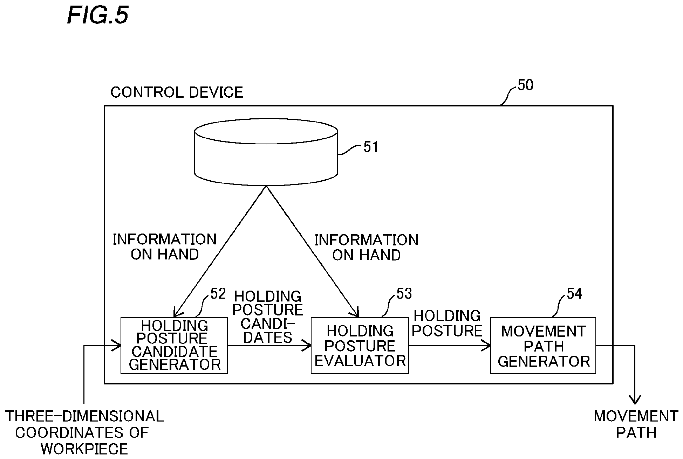

As shown in FIG. 5, the control device 50 includes a storage 51, a holding posture candidate generator 52, a holding posture evaluator 53, and a movement path generator 54. Although the hand 20 is described below, a similar process is performed for the hand 60. The holding posture candidate generator 52, the holding posture evaluator 53, and the movement path generator 54 are examples of a controller.

Information on the hand 20 is stored in the storage 51. In the first embodiment, the information on the hand 20 includes at least one of the types of hands that are exchangeable by the hand exchange mechanism 25, the types of workpiece holders that hold the workpiece 2, or the positions of the workpiece holders. Specifically, in the first embodiment, the information on the hand 20 includes all of the types of hands that are exchangeable by the hand exchange mechanism 25, the types of workpiece holders that hold the workpiece 2, and the positions of the workpiece holders. The types of hands include the hand 20 and the hand 60, for example. The types of workpiece holders include the suckers 23 and the gripper 63b, for example.

In the first embodiment, the positions of the suckers 23 that are movable in the hand 20 include a plurality of positions in a movable range of the suckers 23 in the hand 20 indicated by dotted arrows in FIG. 3. The information on the hand 20 also includes the movable range of the suckers 23.

In the first embodiment, as shown in FIG. 6, the holding posture candidate generator 52 generates a plurality of holding posture candidates of at least one of the robot arm 11 or the hand 20 that can hold the workpiece 2 based on the information on the hand 20 with respect to the position of the workpiece 2 imaged by the imager 40. In the first embodiment, a plurality of holding posture candidates of both the robot arm 11 and the hand 20 that can hold the workpiece 2 are generated. Specifically, the holding posture candidates are generated while at least two of the types of hands that are exchangeable by the hand exchange mechanism 25, the types of workpiece holders that hold the workpiece 2, and the positions of the workpiece holders are associated with each other. More specifically, in the first embodiment, the holding posture candidates are generated while the types of hands that are exchangeable by the hand exchange mechanism 25, the types of workpiece holders that hold the workpiece 2, and the positions of the workpiece holders are all associated with each other. For example, the types of hands, the types of workpiece holders, and the positions of the workpiece holders are associated with each other, and a table is generated. The holding postures include the angle of the joint of the robot arm 11, the value of a movable axis in a case in which the hand 20 has a movable axis, a workpiece holder used for holding in a case in which there are a plurality of workpiece holders, the types of hands in a case in which there are a plurality of hands 20, etc. Alternatively, only two of the types of hands, the types of workpiece holders, and the positions of the workpiece holders may be associated, and a table may be generated.

In the first embodiment, the hand 20 includes a plurality of suckers 23a and 23b, and the holding posture candidate generator 52 generates a plurality of holding posture candidates for each of the plurality of suckers 23a and 23b. Similarly, the holding posture candidate generator 52 also generates a plurality of holding posture candidates of the hand 60.

Specifically, N values of the movable axis of the hand 20 are discretely prepared within the movable range of the hand 20 for each of the sucker 23a and the sucker 23b. The suckers 23a and 23b are combined with a joint angle $\Psi$ such that a plurality of positions of the wrist at the tip end of the robot arm 11 are generated for one workpiece 2. The movable axis of the hand 20 refers to movable axes A1 and A2 in FIG. 3. The value of the movable axis of the hand 20 is represented by joint angle $\Psi = \{\phi_i\}$.

Specifically, a plurality of holding posture candidates are generated by performing inverse transform from the position of the wrist at the tip end of the robot arm 11 to the joint angle $\Psi$ based on the following formula:

$$\theta_i = IK[(p - p_{off}) \times R^{-1}(\phi i) - p_{w2j}]$$

where $\theta_i$ is a candidate for the holding posture, IK is the inverse transform function of the robot arm 11, p is the position of the workpiece 2 output from the imager 40; the position of the workpiece 2 is three-dimensional coordinates, $p_{off}$ is a position vector from the movable axis A1 of the hand 20 to the sucker 23a, $p_{off}$ is also a position vector from the movable axis A2 of the hand 20 to the sucker 23b, R is a rotation matrix according to the values of the movable axes A1 and A2 of the hand 20, and $p_{w2j}$ is a position vector from the position of the wrist at the tip end of the robot arm 11 to the movable axis A1 or A2 of the hand 20.

FIG. 6 shows a conceptual diagram in which the two suckers 23a and 23b are provided, and the number N of joint angles $\Psi$ of the hand 20 is three. The holding posture candidate generator 52 generates three holding posture candidates for the sucker 23a. In FIGS. 6A, 6B, and 6C, the three holding posture candidates are different from each other in the posture of the robot arm 11, the angle of the support 21 of the hand 20 with respect to a vertical direction, and the position of the sucker 23a on the support 21, for example.

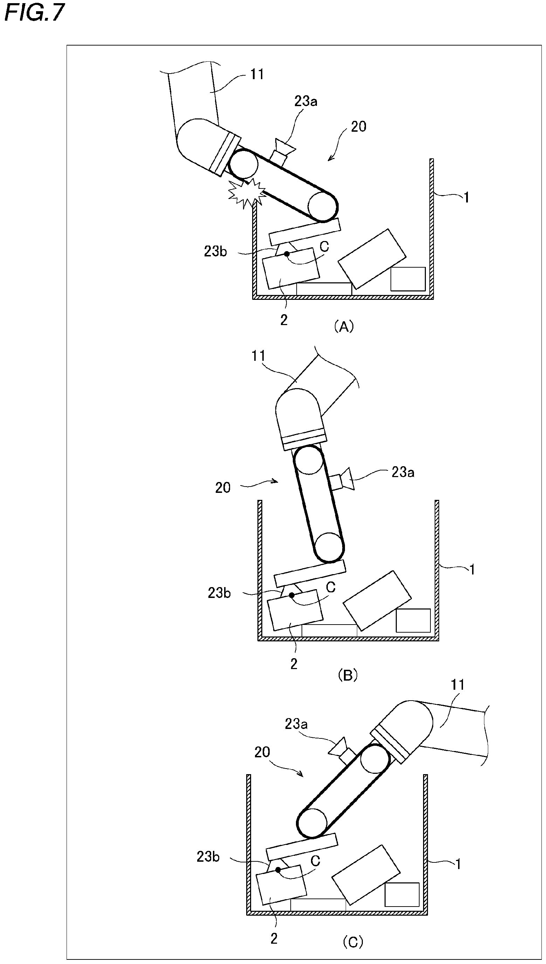

The holding posture candidate generator 52 similarly generates three holding posture candidates for the sucker 23b, as shown in FIGS. 7A, 7B, and 7C. Thus, the holding posture candidates are not generated continuously for all positions of the movable sucker 23a and sucker 23b, but are generated for several discrete positions. The number of holding posture candidates can be set to any number.

In the first embodiment, the holding posture evaluator 53 of the control device 50 evaluates a plurality of generated holding posture candidates based on indices including the difficulty of interference of at least one of the robot arm 11 or the hand 20 at the time at which the workpiece 2 is held with surrounding objects. Specifically, in the first embodiment, the plurality of generated holding posture candidates are evaluated based on the indices including the difficulty of interference of both the robot arm 11 and the hand 20 with the surrounding objects. The holding posture evaluator 53 determines whether or not the plurality of generated holding posture candidates cause interference with the surrounding objects, and evaluates holding posture candidates determined not to cause interference with the surrounding objects based on the indices including the difficulty of interference. The surrounding objects are a workpiece 2 around the workpiece 2 to be held, and the box 1, for example. In FIG. 6, the workpiece 2 to be held is a workpiece 2 placed at a corner of the box 1. In examples of FIGS. 6 and 7, the robot arm 11 and the box 1 interfere with each other in the holding postures shown in FIGS. 6A, 6B, and 7A, and thus the holding postures shown in FIGS. 6A, 6B, and 7A are not subject to evaluation based on the indices. The time at which the workpiece 2 is held refers to the moment at which the sucker 23a or the sucker 23b holds the workpiece 2.

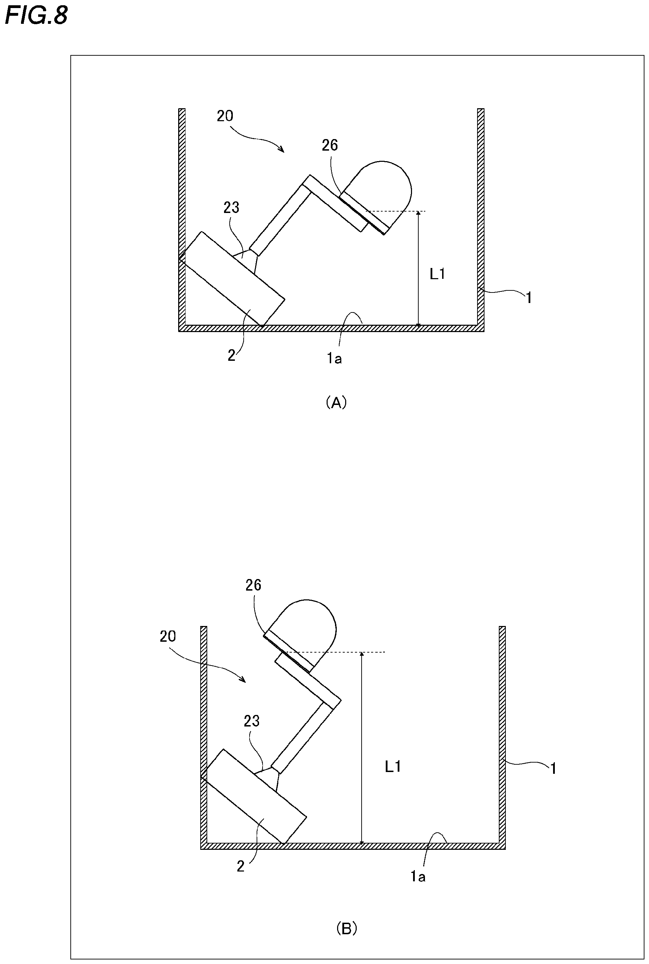

As shown in FIG. 8, the difficulty of interference refers to a margin for interference of the hand 20 or the robot arm 11 with the surrounding objects. In FIG. 8, the shape of the hand 20 is simplified and described. Furthermore, the margin for interference refers to a distance L1 between the hand 20 or the robot arm 11 and the surrounding object. For example, in an example shown in FIG. 8, the position of a flange 26, which is the mounting position of the hand 20 at the tip end of the robot arm 11, is spaced farther apart from the bottom surface 1a of the box 1 in a case of FIG. 8B than in a case of FIG. 8A. Therefore, it is determined that interference is less likely to occur in FIG. 8B. That is, the holding posture shown in FIG. 8B is selected instead of the holding posture shown in FIG. 8A.

Alternatively, one holding posture candidate may be generated and this holding posture candidate may be evaluated repeatedly, or a plurality of holding posture candidates may be generated and then a plurality of holding posture candidates may be evaluated collectively.

In the first embodiment, the indices include the movement time of at least one of the robot arm 11 or the hand 20 until the workpiece 2 is held in addition to the difficulty of interference of at least one of the robot arm 11 or the hand 20 with the surrounding objects. Specifically, in the first embodiment, the indices include the movement time of both the robot arm 11 and the hand 20 until the workpiece 2 is held in addition to the difficulty of interference of both the robot arm 11 and the hand 20 with the surrounding objects. That is, the movement time of the robot arm 11 and the hand 20 from the initial positions of the robot arm 11 and the hand 20 to each of a plurality of holding postures determined not to cause interference with the surrounding objects is calculated. Then, a holding posture with a shorter movement time is evaluated as an appropriate holding posture.

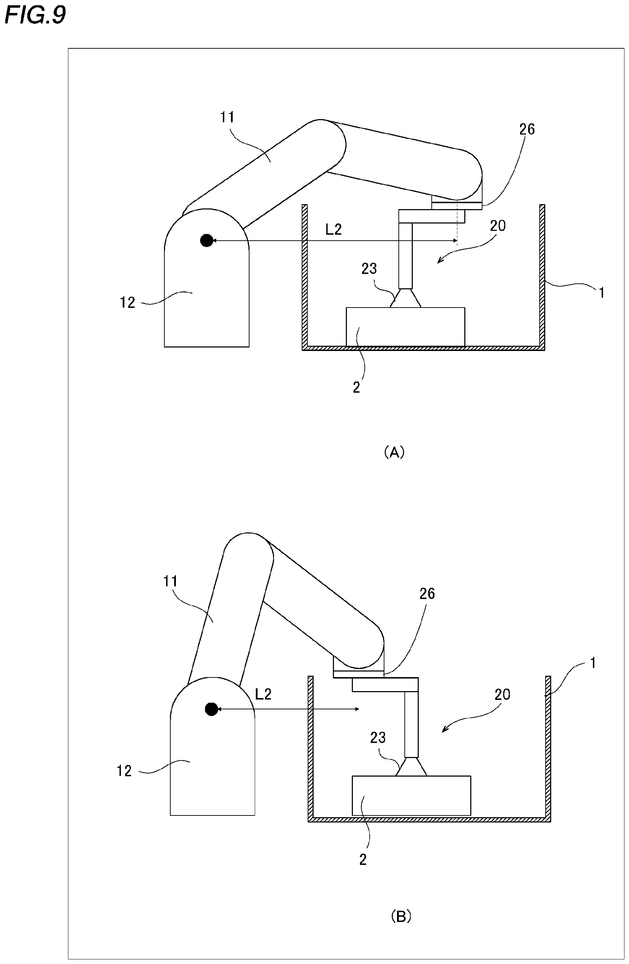

In the first embodiment, as shown in FIG. 9, the indices further include the naturalness of the posture of at least one of the robot arm 11 or the hand 20 in addition to the difficulty of interference with the surrounding objects and the movement time. Specifically, in the first embodiment, the indices further include the naturalness of the posture of the robot arm 11. The naturalness of the posture of at least one of the robot arm 11 or the hand 20 includes the absence of a feeling of strangeness in posture based on human empirical rules, the naturalness of movement to hold the workpiece 2, and the naturalness of movement of the hand 20 or the robot arm 11. Even if there is no problem in holding the workpiece 2 in a posture that makes people feel strange, a collision with a known object is conceivably found in the movement path P generated after that and re-evaluation is conceivably performed with a different posture, or the number of relay points conceivably increases and it conceivably takes time to move. In FIG. 9, the shape of the hand 20 is simplified and described. For example, as shown in FIG. 9, the posture of the robot arm 11 is based on a distance L2 between a base 12 of the robot 10 and the location of the flange 26. Specifically, the distance L2 refers to a distance L2 between the origin of a base coordinate system of the base 12 and the center of the flange 26. When the distance L2 between the base 12 of the robot 10 and the location of the flange 26 shown in FIG. 9B is smaller than that shown in FIG. 9A, the posture of the robot arm 11 shown in FIG. 9B is evaluated as appropriate.

In the first embodiment, the holding posture evaluator 53 evaluates the plurality of generated holding posture candidates while the indices are weighted. Specifically, the holding posture candidate $\theta*$ is evaluated based on the following formulas:

$$\theta* = \mathrm{argmin}\ J(\theta)$$

$$J(\theta) = \Sigma w_i x_i(\theta),\ (i = 1,\ 2,\ 3)$$

where $w_i$ represents a weight on each index. For example, $w_1:w_2:w_3$ is 2:2:1. Furthermore, $x_i$ represents the difficulty of interference between the robot arm 11 and the hand 20, and in other words, $x_i$ is a margin for interference between the robot arm 11 and the hand 20 and the surrounding objects. Moreover, $x_2$ represents the movement time of the robot arm 11 and the hand 20 until the robot arm 11 and the hand 20 shift to their holding postures, and $x_3$ represents the postures of the robot arm 11 and the hand 20.

In the first embodiment, the movement path generator 54 generates the movement path P of at least one of the robot arm 11 or the hand 20 for one or more holding postures selected from among the plurality of evaluated holding posture candidates. Specifically, in the first embodiment, movement paths P of both the robot arm 11 and the hand 20 are generated. As shown in FIG. 10, the movement paths P include paths from the initial positions of the robot arm 11 and the hand 20 to the selected holding posture, and paths from picking up the workpiece 2 from the box 1 to transporting it to a predetermined position. The initial positions are the positions of the robot arm 11 and the hand 20 on the right side of FIG. 10. The predetermined position is the positions of the robot arm 11 and the hand 20 on the left side of FIG. 10.

In the first embodiment, as shown in FIG. 2, a plurality of workpieces 2 are provided inside the box 1. The hand 20 can hold a plurality of workpieces 2 by the plurality of suckers 23. The expression "can hold" indicates that the hand 20 may hold a plurality of workpieces 2 or may hold only one workpiece 2. Specifically, in the first embodiment, the hand 20 can hold two workpieces 2. The holding posture candidate generator 52 of the control device 50 generates holding posture candidates with respect to the plurality of workpieces 2. For example, when the sucker 23a is selected as one sucker of the plurality of suckers 23 for one workpiece 2 of the plurality of workpieces 2, the holding posture evaluator 53 does not generate and evaluate holding posture candidates for the sucker 23a, but generates and evaluates holding posture candidates for the other sucker 23b with respect to another workpiece 2 of the plurality of workpieces 2.

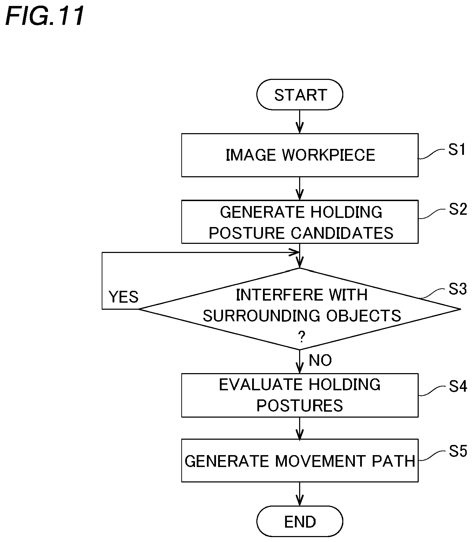

A movement path generation method for the robot arm 11 and the hand 20 is now described with reference to FIG. 11. Generation of the movement path P of the hand 20 is performed by the control device 50. Although the hand 20 is described below, a similar process is performed for the hand 60.

In step S1, the workpiece 2 is imaged. The workpiece 2 is imaged by the imager 40. The imager 40 outputs the three-dimensional coordinates of the workpiece 2.

In step S2, a plurality of holding posture candidates in which the workpiece 2 can be held are generated based on the information on the hand 20 including the sucker 23 holding the workpiece 2 with respect to the position of the imaged workpiece 2.

In step S3, it is determined whether or not the plurality of generated holding posture candidates cause interference with the surrounding objects. In a case of NO in step S3, the process advances to step S4. In a case of YES in step S3, the process returns to step S3.

In step S4, the holding posture candidates determined not to cause interference with the surrounding objects are evaluated based on the indices including the difficulty of interference of at least one of the robot arm 11 to which the hand 20 is attached or the hand 20 with the surrounding objects. In the first embodiment, the holding posture candidates are evaluated based on the indices including the difficulty of interference of both the robot arm 11 and the hand 20 with the surrounding objects.

In step S5, the movement path P of at least one of the robot arm 11 or the hand 20 is generated for a holding posture selected from among the plurality of evaluated holding posture candidates. In the first embodiment, the movement paths P of both the robot arm 11 and the hand 20 are generated.

Advantages of First Embodiment

According to the first embodiment, the following advantages are achieved. Although a case in which the hand 20 is attached to the robot arm 11 is described below, similar advantages are achieved even when the hand 60 is attached to the robot arm 11.

According to the first embodiment, as described above, the control device 50 is configured or programmed to evaluate the plurality of generated holding posture candidates based on the indices including the difficulty of interference of at least one of the robot arm 11 or the hand 20 with the surrounding objects, and thus a holding posture candidate that is less likely to cause interference can be selected from among the holding postures in which the workpiece 2 can be held. Consequently, interference between at least one of the robot arm 11 or the hand 20 and the surrounding objects can be further reduced or prevented. Therefore, the movement path P of at least one of the robot arm 11 or the hand 20 can be generated while interference between at least one of the robot arm 11 or the hand 20 and the surrounding objects is further reduced or prevented.

According to the first embodiment, as described above, the control device 50 is configured or programmed to determine whether or not the plurality of generated holding posture candidates cause interference with the surrounding objects, and evaluate the holding posture candidates determined not to cause interference with the surrounding objects based on the indices including the difficulty of interference. Accordingly, a holding posture that does not cause interference with the surrounding objects and can further prevent interference with the surrounding objects can be appropriately selected.

According to the first embodiment, as described above, the indices include the movement time of at least one of the robot arm 11 or the hand 20 until the workpiece 2 is held in addition to the difficulty of interference of at least one of the robot arm 11 or the hand 20 with the surrounding objects. Accordingly, a holding posture in which the workpiece 2 can be quickly held while interference with the surrounding objects is further reduced or prevented can be selected. Furthermore, the holding posture in which the workpiece 2 can be quickly held can be selected, and thus the operating time for holding the workpiece 2 can be reduced.

According to the first embodiment, as described above, the indices further include the posture of at least one of the robot arm 11 or the hand 20 in addition to the difficulty of interference with the surrounding objects and the movement time. Accordingly, the posture of at least one of the robot arm 11 or the hand 20 is included in the indices, and thus a holding posture in which a load is hardly applied to at least one of the robot arm 11 or the hand 20 can be selected. Consequently, a holding posture in which the workpiece 2 can be quickly held while interference with the surrounding objects is further reduced or prevented, and a load is hardly applied to at least one of the robot arm 11 or the hand 20 can be selected.

According to the first embodiment, as described above, the control device 50 is configured or programmed to evaluate the plurality of generated holding posture candidates while weighting the indices. Accordingly, when there are a plurality of indices, the degree of contribution of the plurality of indices to the evaluation of the holding postures can be adjusted by adjusting the weights on the indices.

According to the first embodiment, as described above, the information on the hand 20 includes at least one of the types of hands that are exchangeable by the hand exchange mechanism 25, the types of workpiece holders, or the positions of the workpiece holders. Accordingly, the holding posture candidates can be appropriately generated based on the information of at least one of the types of hands that are exchangeable by the hand exchange mechanism 25, the types of workpiece holders, or the positions of the workpiece holders.

According to the first embodiment, as described above, the holding posture candidates are generated while at least two of the types of hands that are exchangeable by the hand exchange mechanism 25, the types of workpiece holders that hold the workpiece 2, and the positions of the workpiece holders are associated with each other. Accordingly, the holding posture candidates can be easily evaluated based on the association between the types of hands that are exchangeable by the hand exchange mechanism 25, the types of workpiece holders, and the positions of the workpiece holders.

According to the first embodiment, as described above, the suckers 23 are movable in the hand 20, and the positions of the suckers 23 include a plurality of positions within the movable ranges of the suckers 23 in the hand 20. Accordingly, even when the positions of the suckers 23 move in the hand 20, the holding posture candidates in which the workpiece 2 can be held can be appropriately generated based on the plurality of positions within the movable ranges of the suckers 23 in the hand 20.

According to the first embodiment, as described above, the hand 20 includes at least one of the deformable configuration including the movable axes A1 and A2 or the configuration including the plurality of suckers 23. Accordingly, a plurality of holding postures generated based on the information on the hand 20 including at least one of the deformable configuration including the movable axes A1 and A2 or the configuration including the plurality of suckers 23 are evaluated. Thus, the movement path P of at least one of the robot arm 11 or the hand 20 including the deformable configuration including the movable axes A1 and A2 and/or the configuration including the plurality of suckers 23 can be generated while interference with the surrounding objects is further reduced or prevented. Furthermore, the hand 20 is deformable and includes the movable axes A1 and A2 such that the workpiece 2 that is difficult to hold with the hand 20 having a fixed shape, such as the workpiece 2 placed at the corner of the box 1, can be held by deforming the hand 20. Moreover, the plurality of suckers 23 are provided in the hand 20 such that a plurality of workpieces 2 can be held by one hand 20, and thus the operating time for holding and moving the workpieces 2 to a predetermined position can be reduced.

According to the first embodiment, as described above, the plurality of workpieces 2 are provided, the plurality of suckers 23 are provided in the hand 20 to hold the plurality of workpieces 2, and the control device 50 is configured or programmed to generate the holding posture candidates with respect to the plurality of workpieces 2. Accordingly, even when the hand 20 includes the plurality of suckers 23, an appropriate holding posture can be selected.

According to the first embodiment, as described above, the control device 50 is configured or programmed to, when one sucker of the plurality of suckers 23 is selected for one workpiece 2 of the plurality of workpieces 2, not generate and evaluate the holding posture candidates for one sucker 23, but generate and evaluate the holding posture candidates for another sucker 23 with respect to another workpiece 2 of the plurality of workpieces 2. Accordingly, the holding posture candidates for one sucker 23 are not generated and evaluated with respect to the workpiece 2, and thus the control load on the control device 50 can be reduced.

According to the first embodiment, as described above, the hand 20 includes the suckers 23, and the movement path P can be generated for the hand 20 including the suckers 23 while interference with the surrounding objects is further reduced or prevented.


Second Embodiment

A robot system 100 according to a second embodiment is now described. In the second embodiment, a workpiece 2 is held continuously by two suckers 23a and 23b of a hand 20.

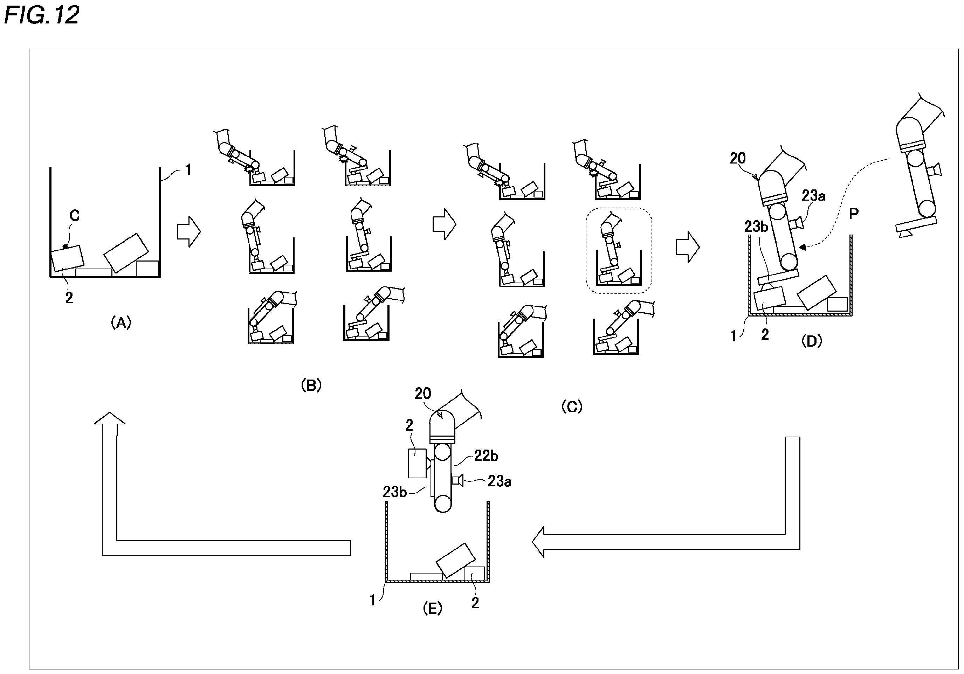

As shown in FIG. 12A, the workpiece 2 placed inside a box 1 is imaged. Then, as shown in FIG. 12B, a holding posture candidate generator 52 generates a plurality of candidate holding postures for each of the two suckers 23a and 23b based on the captured image of the workpiece 2. The holding posture candidate generator 52 models a robot arm 11 and the hand 20 based on CAD data, for example. Holding posture candidates are generated based on the modeled robot arm 11 and hand 20. The workpiece 2 is modeled based on a three-dimensional image captured by an imager 40 or the CAD data, for example.

Then, as shown in FIG. 12C, a holding posture evaluator 53 evaluates a plurality of generated holding posture candidates based on indices including the difficulty of interference of both the robot arm 11 and the hand 20 with surrounding objects at the time at which the workpiece 2 is held. For example, suppose that the holding posture of the sucker 23b is selected based on the evaluation based on the indices including the difficulty of interference. As shown in FIG. 12D, a movement path generator 54 generates a movement path P for the selected holding posture. A control device 50 causes the sucker 23b to hold the workpiece 2 based on the generated movement path P.

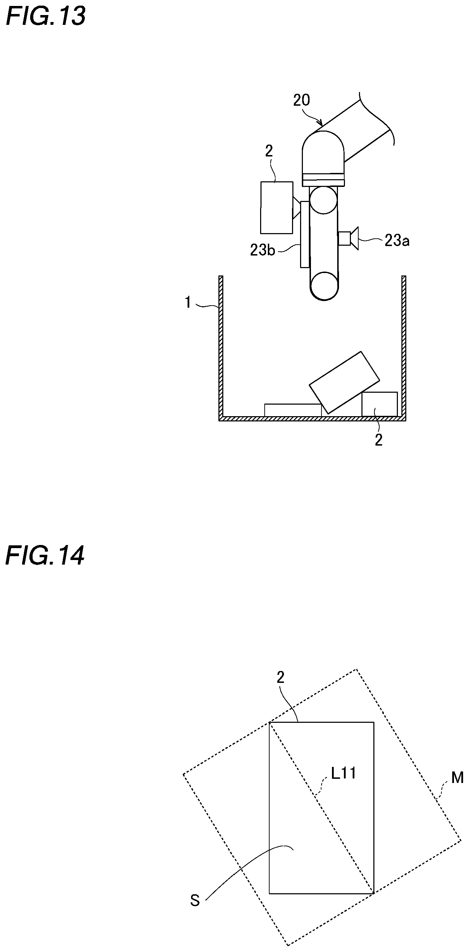

In the second embodiment, the suckers 23a and 23b are movable in the hand 20, as shown in FIGS. 12E and 13. After causing the sucker 23b to hold the workpiece 2, the control device 50 moves the sucker 23b to retract the held workpiece 2. The control device 50 moves the sucker 23b in the hand 20 by rotating a chain 22b to retract the workpiece 2 held by the sucker 23b.

In the second embodiment, after causing the sucker 23b to hold the workpiece 2, the control device 50 moves the sucker 23b to retract the held workpiece 2 away from the remaining workpieces 2. The remaining workpieces 2 are the workpieces 2 remaining in the box 1 that are not to be held by the sucker 23b. The control device 50 retracts the workpiece 2 above a position at which the workpiece 2 is held by the sucker 23b.

In the second embodiment, the control device 50 moves the sucker 23B to retract the held workpiece 2 to the side of the hand 20 after causing the sucker 23b to hold the workpiece 2. The side of the hand 20 refers to the side of hand 20 in a horizontal direction. The workpiece 2 is retracted to a position between the tip end and the base of the hand 20.

Then, in the second embodiment, the holding posture candidate generator 52 generates a plurality of holding posture candidates for the sucker 23a after causing the sucker 23b to hold the workpiece 2. The holding posture candidate generator 52 may generate the holding posture candidates based on an image of the workpiece 2 recaptured by the imager 40, or may generate the holding posture candidates based on the previously captured image without recapturing an image. In other words, after the workpiece 2 is retracted as shown in FIG. 12E, the workpiece 2 is recaptured as shown in FIG. 12A, or the process advances to FIG. 12B without capturing the image in FIG. 12A and holding posture candidates for holding a workpiece 2 by the sucker 23a are generated using the image captured to hold the first workpiece 2. In the current generation of holding posture candidates, holding posture candidates for the sucker 23b are not generated.

Then, the holding posture evaluator 53 evaluates a plurality of holding posture candidates. In the second embodiment, the holding posture candidates are evaluated with the retracted workpiece 2 included as a component of a robot 10.

In the second embodiment, as shown in FIG. 14, after causing the sucker 23b to hold the workpiece 2, the holding posture candidate generator 52 evaluates the holding posture candidates for the sucker 23a with a model M of the workpiece 2 held by the sucker 23b larger than the size of the workpiece 2. In other words, the three-dimensional model M of the workpiece 2 is larger than the size of the workpiece 2 based on the three-dimensional image captured by the imager 40 or the CAD data, for example.

In the second embodiment, the workpiece 2 has a rectangular parallelepiped shape. The holding posture candidate generator 52 of the control device 50 sizes the model M of the workpiece 2 held by the sucker 23b to be larger than the size of the workpiece 2 based on the length of the diagonal L11 of each surface S of the rectangular parallelepiped shape. For example, the holding posture candidate generator 52 generates a square with the diagonal L11 as one side for each surface S of the rectangular parallelepiped shape. A cube formed by the generated six squares is the model M of the workpiece 2.

The holding posture evaluator 53 evaluates a plurality of holding posture candidates using the workpiece 2 as a component of the robot 10 and the model M of the workpiece 2 that is sized to be larger than the actual workpiece 2. The holding posture evaluator 53 evaluates the holding posture candidates based on the indices including the difficulty of interference of both the robot arm 11 and the hand 20 with the surrounding objects at the time at which the workpiece 2 is held. Although the above configuration shows an example in which the retracted workpiece 2 is set as a component of the robot 10 when the holding posture candidates are evaluated, the retracted workpiece 2 may be set as a component of the robot 10 at the stage of generating the holding posture candidates. In other words, the holding posture candidates may be generated such that the retracted workpiece 2 is included as a component of the robot 10.

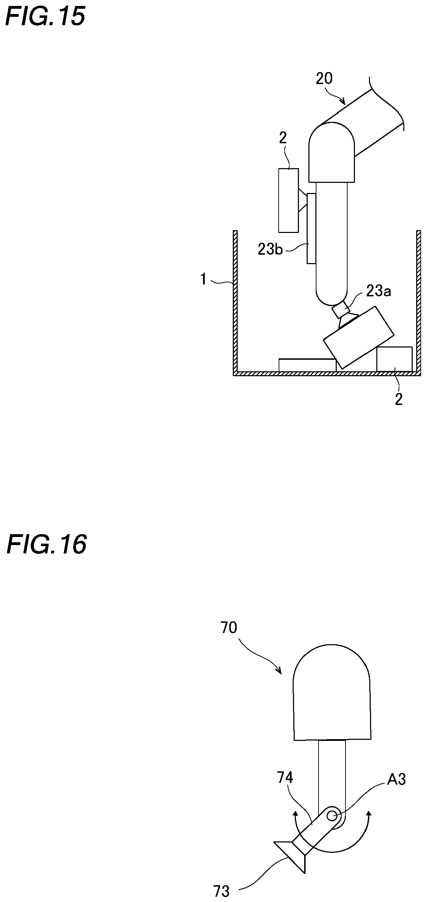

Then, the movement path generator 54 generates the movement path P for the selected holding posture. As shown in FIG. 15, the control device 50 causes the sucker 23a to hold the workpiece 2 based on the generated movement path P. Finally, the control device 50 moves the robot arm 11 while the workpiece 2 is held by the sucker 23a and the workpiece 2 is held by the sucker 23b. Thus, the two workpieces 2 are transported to a predetermined position.

Although an example in which the workpiece 2 is first held by the sucker 23b is described above, the workpiece 2 may be first held by the sucker 23a.

Advantages of Second Embodiment

According to the second embodiment, the following advantages are achieved.

According to the second embodiment, the control device 50 is configured or programmed to generate the plurality of holding posture candidates for the plurality of suckers 23, evaluate the plurality of holding posture candidates, cause one sucker 23 of the plurality of suckers 23 to hold the workpiece 2, generate the plurality of holding posture candidates for another sucker 23 of the plurality of suckers 23 after causing one sucker 23 to hold the workpiece 2, evaluate the plurality of holding posture candidates, and cause another sucker 23 to hold the workpiece 2. Accordingly, a plurality of workpieces 2 can be continuously picked up by one hand 20, and thus the time required to move the plurality of workpieces 2 can be reduced.

According to the second embodiment, the plurality of suckers 23 are movable in the hand 20, and the control device 50 is configured or programmed to, after causing one sucker 23 to hold the workpiece 2, move the sucker 23 to retract the held workpiece 2. Accordingly, the workpiece 2 held by one sucker 23 is retracted, and thus hindering of the operation of another sucker 23 to hold the workpiece 2 by the workpiece 2 held by one sucker 23 can be reduced or prevented.

According to the second embodiment, the control device 50 is configured or programmed to, after causing one sucker 23 to hold the workpiece 2, move the sucker 23 to retract the held workpiece 2 away from the remaining workpieces 2. Accordingly, the workpiece 2 held by one sucker 23 is spaced apart from the remaining workpieces 2, and thus hindering of the operation of another sucker 23 to hold the workpiece 2 by the workpiece 2 held by one sucker 23 can be further reduced or prevented.

According to the second embodiment, the control device 50 is configured or programmed to, after causing one sucker 23 to hold the workpiece 2, move one sucker 23 to retract the held workpiece 2 to the side of the hand 20. Accordingly, the workpiece 2 held by one sucker 23 is retracted to the side of the hand 20, and thus another sucker 23 can be moved to the tip end of the hand 20, and the workpiece 2 can be held by another sucker 23.

According to the second embodiment, the control device 50 is configured or programmed to, after causing one sucker 23 to hold the workpiece 2, evaluate the holding posture candidates for another sucker 23 of the plurality of suckers 23 in a state in which the workpiece 2 held by one sucker 23 is included as a component of the robot 10. Accordingly, the holding posture candidates are evaluated in a state in which the workpiece 2 held by one sucker 23 is included as a component of the robot 10, and thus interference between the workpiece 2 held by one sucker 23 and the surrounding objects can be easily reduced or prevented.

According to the second embodiment, the control device 50 is configured or programmed to, after causing one sucker 23 to hold the workpiece 2, evaluate the holding posture candidates for another sucker 23 of the plurality of suckers 23 with the model M of the workpiece 2 held by one sucker 23 larger than the size of the workpiece 2. A portion of the workpiece 2 actually held by one sucker 23 is not necessarily an ideal position, such as the center portion. The model M of the workpiece 2 and the actual size of the workpiece 2 may deviate from each other. Therefore, even when the workpiece 2 is held according to the generated holding posture candidates, the workpiece 2 may collide with the surrounding objects when the workpiece 2 held by one sucker 23 is moved. Therefore, the holding posture candidates are evaluated with the model M of the workpiece 2 held by one sucker 23 larger than the size of the workpiece 2 such that collision of the workpiece 2 held by one sucker 23 and moved with the surrounding objects can be reduced or prevented.

According to the second embodiment, the workpiece 2 has a rectangular parallelepiped shape, and the control device 50 is configured or programmed to size the model M of the workpiece 2 held by one sucker 23 to be larger than the size of the workpiece 2 based on the length of the diagonal L11 of each surface S of the rectangular parallelepiped shape. Accordingly, the model M of the workpiece 2 can be easily made relatively large, and thus collision of the workpiece 2 held by one sucker 23 and moved with the surrounding objects can be easily reduced or prevented.

Modified Examples

The embodiments disclosed this time must be considered as illustrative in all points and not restrictive. The scope of the present disclosure is not shown by the above description of the embodiments but by the scope of claims for patent, and all modifications (modified examples) within the meaning and scope equivalent to the scope of claims for patent are further included.

For example, while the example in which the hand 20 includes the plurality of suckers 23, or the hand 60 includes the sucker 63a and the gripper 63b has been shown in each of the aforementioned first and second embodiments, the present disclosure is not limited to this. The present disclosure is also applicable to a configuration in which a hand 70 includes one sucker 73, as shown in FIG. 16. In the hand 70 shown in FIG. 16, a link 74 is rotatable about a movable axis A3. That is, the hand 70 is deformable. The sucker 73 is an example of a workpiece holder.

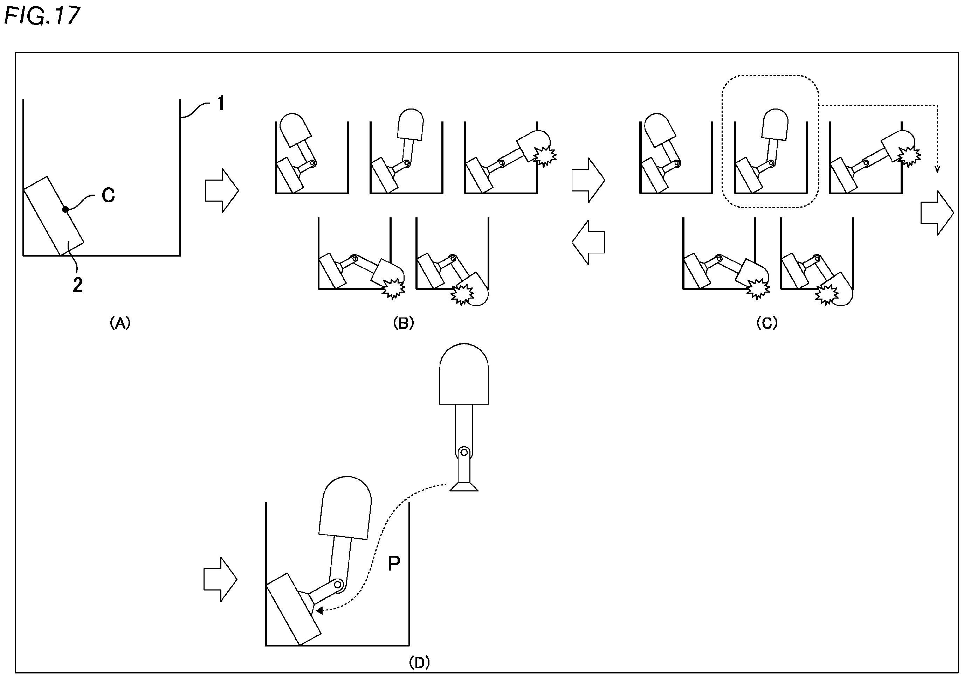

As shown in FIG. 17A, a workpiece 2 placed inside a box 1 is imaged. Then, as shown in FIG. 17B, a plurality of holding posture candidates in which the workpiece 2 can be held are generated for the hand 70 including one sucker 73 and a robot arm 11. Then, as shown in FIG. 17C, the plurality of generated holding posture candidates are evaluated. Then, as shown in FIG. 17D, a movement path P is generated for the selected holding posture. In an example shown in FIG. 17, after one holding posture candidate is generated, this holding posture candidate is evaluated, and then another holding posture candidate is generated, but after a plurality of holding posture candidates are generated, the plurality of holding posture candidates may be evaluated.

While the example in which the holding posture candidates are generated for both the robot arm 11 and the hand 20, the holding postures are evaluated, and the movement path P is generated has been shown in each of the aforementioned first and second embodiments, the present disclosure is not limited to this. For example, the holding posture candidates may be generated for one of the robot arm 11 and the hand 20, the holding postures may be evaluated, and the movement path P may be generated.

While the example in which the holding posture candidates determined not to cause interference with the surrounding objects are evaluated based on the indices has been shown in each of the aforementioned first and second embodiments, the present disclosure is not limited to this. For example, holding posture candidates determined to cause interference with the surrounding objects may also be evaluated based on the indices.

While the example in which the indices include the difficulty of interference, the movement time, and the postures of the robot arm 11 and the hand 20 has been shown in each of the aforementioned first and second embodiments, the present disclosure is not limited to this. For example, the indices may include only the difficulty of interference. Alternatively, the indices may include only the difficulty of interference and the movement time. Alternatively, the indices may include only the difficulty of interference, the posture of the hand 20, and the posture of the hand 60.

While the example in which the difficulty of interference of both the robot arm 11 and the hand 20 with the surrounding objects is used as the index has been shown in each of the aforementioned first and second embodiments, the present disclosure is not limited to this. For example, the difficulty of interference of one of the robot arm 11 and the hand 20 with the surrounding objects may be used as the index.

While the example in which the movement time of both the robot arm 11 and the hand 20 is used as the index has been shown in each of the aforementioned first and second embodiments, the present disclosure is not limited to this. For example, the movement time of one of the robot arm 11 and the hand 20 may be used as the index.

While the example in which the posture of the robot arm 11 is used as the index has been shown in each of the aforementioned first and second embodiments, the present disclosure is not limited to this. For example, the postures of both the robot arm 11 and the hand 20 or the posture of only the hand 20 may be used as the index.

While the example in which the holding posture candidates are evaluated with the weighted indices has been shown in each of the aforementioned first and second embodiments, the present disclosure is not limited to this. In the present disclosure, the holding posture candidates may be evaluated without weighting the indices. In other words, weights on the indices may be the same.

While the example in which the information on the hand 20 includes all of the types of hands 20 that are exchangeable by the hand exchange mechanism 25, the types of workpiece holders, and the positions of the workpiece holders has been shown in each of the aforementioned first and second embodiments, the present disclosure is not limited to this. In the present disclosure, the information on the hand 20 may include one or two of the types of hands 20 that are exchangeable by the hand exchange mechanism 25, the types of workpiece holders, and the positions of the workpiece holders.

While the example in which when the sucker 23a of the plurality of suckers 23 is selected for one workpiece 2 of the plurality of workpieces 2, the holding posture candidates for the sucker 23a are not generated and evaluated with respect to another workpiece 2 of the plurality of workpieces 2 has been shown in each of the aforementioned first and second embodiments, the present disclosure is not limited to this. In the present disclosure, even when the sucker 23a of the plurality of suckers 23 is selected, the holding posture candidates for the sucker 23a may be generated and evaluated with respect to another workpiece 2 of the plurality of workpieces 2.

While the example in which the robot controller 30 and the control device 50 are separately provided has been shown in each of the aforementioned first and second embodiments, the present disclosure is not limited to this. For example, the functions of the control device 50 according to the present disclosure may be implemented by the robot controller 30.

While the example in which the two suckers 23a and 23b are arranged in the hand 20 has been shown in the aforementioned second embodiment, the present disclosure is not limited to this. For example, three or more suckers may be arranged in the hand 20 to continuously hold three or more workpieces 2.

While the example in which the first held workpiece 2 is retracted to the side of the hand 20 has been shown in the aforementioned second embodiment, the present disclosure is not limited to this. The first held workpiece 2 may be retracted to a position other than the side of the hand 20 as long as the workpiece 2 at the position does not interfere when the workpiece 2 is held next.

While the example in which the holding posture candidates for holding the next workpiece 2 are generated with the first held workpiece 2 included as a component of the robot 10 has been shown in the aforementioned second embodiment, the present disclosure is not limited to this. The first held workpiece 2 may be treated as the workpiece 2 rather than as a component of the robot 10, and the holding posture candidates for holding the next workpiece 2 may be generated.

While the example in which the model M of the workpiece 2 is sized to be larger than the actual size of the workpiece 2 based on the length of the diagonal L11 of each surface S of the rectangular parallelepiped shape has been shown in the aforementioned second embodiment, the present disclosure is not limited to this. For example, the model M of the workpiece 2 may be sized to be larger than the actual size of the workpiece 2 by a predetermined constant magnification such as 1.5 times.

While the example in which the workpiece 2 has a rectangular parallelepiped shape has been shown in the aforementioned second embodiment, the present disclosure is not limited to this. The workpiece 2 may have a shape other than a rectangular parallelepiped shape, such as a cylindrical shape.

While the example in which the plurality of holding posture candidates are generated for each of the two suckers 23a and 23b, and the plurality of generated holding posture candidates are evaluated based on the indices including the difficulty of interference has been shown in the aforementioned second embodiment, the present disclosure is not limited to this. For example, the holding posture candidate generator 52 may generate the plurality of holding posture candidates for each of the two suckers 23a and 23b, and the holding posture evaluator 53 may evaluate the plurality of generated holding posture candidates based on an index including whether or not at least one of the robot arm 11 or the hand 20 interferes with the surrounding objects at the time at which the workpiece 2 is held. In this case, the movement path generator 54 generates a movement path P of at least one of the robot arm 11 or the hand 20 for the holding posture of one of the two suckers 23a and 23b selected from among the plurality of evaluated holding posture candidates. One of the suckers 23a and 23b holds the workpiece 2 along the generated movement path P. After one of the suckers 23a and 23b holds the workpiece 2, the holding posture candidate generator 52 generates a plurality of holding posture candidates for the other of the suckers 23a and 23b. The holding posture evaluator 53 evaluates the plurality of generated holding posture candidates based on the index including whether or not the interference occurs. The movement path generator 54 generates a movement path P for a holding posture selected from among the plurality of evaluated holding posture candidates. The other of the suckers 23a and 23b holds the workpiece 2 along the generated movement path P. Thus, a plurality of workpieces 2 can be continuously picked up by one hand 20, and thus the time required to generate the movement path P of at least one of the robot arm 11 or the hand 20 and move the plurality of workpieces 2 can be reduced while interference between at least one of the robot arm 11 or the hand 20 and the surrounding objects is further reduced or prevented.

The functionality of the elements disclosed herein may be implemented using circuitry or processing circuitry that includes general purpose processors, special purpose processors, integrated circuits, application specific integrated circuits (ASICs), conventional circuitry and/or combinations thereof that are configured or programmed to perform the disclosed functionality. Processors are considered processing circuitry or circuitry as they include transistors and other circuitry therein. In the present disclosure, the circuitry, units, or means are hardware that carries out or is programmed to perform the recited functionality. The hardware may be hardware disclosed herein or other known hardware that is programmed or configured to carry out the recited functionality. When the hardware is a processor that may be considered a type of circuitry, the circuitry, means, or units are a combination of hardware and software, and the software is used to configure the hardware and/or processor.

Description of Reference Numerals

| | |
|---|---|
| 2: | workpiece |
| 10: | robot |
| 11: | robot arm |
| 20, 60, 70: | hand |
| 23, 23a, 23b, 63a, 73: | sucker (workpiece holder) |
| 25: | hand exchange mechanism |
| 40: | imager |
| 50: | control device (movement path generation device) |
| 52: | holding posture candidate generator (controller) |
| 53: | holding posture evaluator (controller) |
| 54: | movement path generator (controller) |
| 63b: | gripper (workpiece holder) |
| 100: | robot system |
| A1, A2, A3: | movable axis |
| L11: | diagonal |
| M: | model |
| P: | movement path |

**Claims**

1. A robot system comprising:

    a hand including a workpiece holder to hold a workpiece;
    a robot arm to which the hand is attached;
    an imager to image the workpiece; and
    a controller; wherein
    the controller is configured or programmed to:

        generate a plurality of holding posture candidates of at least one of the robot arm or the hand operable to hold the workpiece based on information on the hand with respect to a position of the workpiece imaged by the imager;
        evaluate the plurality of generated holding posture candidates based on an index including difficulty of interference of at least one of the robot arm or the hand with a surrounding object at a time at which the workpiece is held; and
        generate a movement path of at least one of the robot arm or the hand for a holding posture selected from among the plurality of evaluated holding posture candidates.

2. The robot system according to claim 1, wherein the controller is configured or programmed to:

    determine whether or not the plurality of generated holding posture candidates cause interference with the surrounding object; and
    evaluate holding posture candidates determined not to cause interference with the surrounding object based on the index including the difficulty of interference.

3. The robot system according to claim 1, wherein the index includes a movement time of at least one of the robot arm or the hand until the workpiece is held in addition to the difficulty of interference of at least one of the robot arm or the hand with the surrounding object.

4. The robot system according to claim 3, wherein the index further includes a naturalness of a posture of at least one of the robot arm or the hand in addition to the difficulty of interference with the surrounding object and the movement time.

5. The robot system according to claim 3, wherein the controller is configured or programmed to evaluate the plurality of generated holding posture candidates while weighting the index.

6. The robot system according to claim 1, wherein the information on the hand includes at least one of a type of the hand that is exchangeable by a hand exchange mechanism, a type of the workpiece holder, or a position of the workpiece holder.

7. The robot system according to claim 6, wherein the plurality of holding posture candidates are generated while at least two of the type of the hand that is exchangeable by the hand exchange mechanism, the type of the workpiece holder, and the position of the workpiece holder are associated with each other.

8. The robot system according to claim 7, wherein

the workpiece holder is movable in the hand; and
the position of the workpiece holder includes a plurality of positions within a movable range of the workpiece holder in the hand.

9. The robot system according to claim 1, wherein the hand includes at least one of a deformable configuration including a movable axis or a configuration including a plurality of the workpiece holders.

10. The robot system according to claim 1, wherein

the workpiece includes a plurality of workpieces;
the workpiece holder includes a plurality of workpiece holders provided in the hand to hold the plurality of workpieces; and
the controller is configured or programmed to generate the plurality of holding posture candidates with respect to the plurality of workpieces.

11. The robot system according to claim 10, wherein the controller is configured or programmed to, when one workpiece holder of the plurality of workpiece holders is selected for one workpiece of the plurality of workpieces, not generate and evaluate the plurality of holding posture candidates for the one workpiece holder, but generate and evaluate the plurality of holding posture candidates for another workpiece holder of the plurality of workpiece holders, with respect to another workpiece of the plurality of workpieces.

12. The robot system according to claim 10, wherein the controller is configured or programmed to:

generate the plurality of holding posture candidates for the plurality of workpiece holders, evaluate the plurality of holding posture candidates, and cause one workpiece holder of the plurality of workpiece holders to hold the workpiece; and
generate the plurality of holding posture candidates for another workpiece holder of the plurality of workpiece holders after causing the one workpiece holder to hold the workpiece, evaluate the plurality of holding posture candidates, and cause the another workpiece holder to hold the workpiece.

13. The robot system according to claim 12, wherein

the plurality of workpiece holders are movable in the hand; and
the controller is configured or programmed to, after causing the one workpiece holder to hold the workpiece, move the one workpiece holder to retract the held workpiece.

14. The robot system according to claim 13, wherein the controller is configured or programmed to, after causing the one workpiece holder to hold the workpiece, move the one workpiece holder to retract the held workpiece away from a remaining workpiece of the plurality of workpieces.

15. The robot system according to claim 14, wherein the controller is configured or programmed to, after causing the one workpiece holder to hold the workpiece, move the one workpiece holder to retract the held workpiece to a side of the hand.

16. The robot system according to claim 12, wherein the controller is configured or programmed to, after causing the one workpiece holder to hold the workpiece, generate the plurality of holding posture candidates for the another workpiece holder of the plurality of workpiece holders such that the workpiece held by the one workpiece holder is included as a component of a robot, or evaluate the plurality of holding posture candidates for the another workpiece holder of the plurality of workpiece holders in a state in which the workpiece held by the one workpiece holder is included as the component of the robot.

17. The robot system according to claim 12, wherein the controller is configured or programmed to, after causing the one workpiece holder to hold the workpiece, generate the plurality of holding posture candidates for the another workpiece holder of the plurality of workpiece holders with a model of the workpiece held by the one workpiece holder larger than a size of the workpiece, or evaluate the plurality of holding posture candidates for the another workpiece holder of the plurality of workpiece holders with the model of the workpiece held by the one workpiece holder larger than the size of the workpiece.

18. The robot system according to claim 17, wherein

the workpiece has a rectangular parallelepiped shape; and
the controller is configured or programmed to size the model of the workpiece held by the one workpiece holder to be larger than the size of the workpiece based on a length of a diagonal of each surface of the rectangular parallelepiped shape.

19. The robot system according to claim 1, wherein the workpiece holder includes at least one of a gripper or a sucker.

20. A movement path generation device for a robot system, the robot system including a hand including a workpiece holder to hold a workpiece, a robot arm to which the hand is attached, and an imager to image the workpiece, the movement path generation device comprising:

a controller; wherein
the controller is configured or programmed to:

generate a plurality of holding posture candidates of at least one of the robot arm or the hand operable to hold the workpiece based on information on the hand with respect to a position of the workpiece imaged by the imager;
evaluate the plurality of generated holding posture candidates based on an index including difficulty of interference of at least one of the robot arm or the hand with a surrounding object at a time at which the workpiece is held; and
generate a movement path of at least one of the robot arm or the hand for a holding posture selected from among the plurality of evaluated holding posture candidates.

21. A movement path generation method comprising:

imaging a workpiece;
generating, based on information on a hand including a workpiece holder to hold the workpiece, a plurality of holding posture candidates of at least one of a robot arm or the hand operable to hold the workpiece with respect to a position of the imaged workpiece;
evaluating the plurality of generated holding posture candidates based on an index including difficulty of interference of at least one of the robot arm to which the hand is attached or the hand with a surrounding object at a time at which the workpiece is held; and
generating a movement path of at least one of the robot arm or the hand for a holding posture selected from among the plurality of evaluated holding posture candidates.

22. A robot system comprising:

a hand including a plurality of workpiece holders to hold a workpiece;
a robot arm to which the hand is attached;

an imager to image the workpiece; and
a controller; wherein
the controller is configured or programmed to:

generate, for each of the plurality of workpiece holders, a plurality of holding posture candidates of at least one of the robot arm or the hand operable to hold the workpiece based on information on the hand with respect to a position of the workpiece imaged by the imager;

evaluate the plurality of generated holding posture candidates based on an index including whether or not at least one of the robot arm or the hand interferes with a surrounding object at a time at which the workpiece is held;

generate a movement path of at least one of the robot arm or the hand for a holding posture of one workpiece holder of the plurality of workpiece holders selected from among the plurality of evaluated holding posture candidates;

cause the one workpiece holder to hold the workpiece along the generated movement path;

generate the plurality of holding posture candidates for another workpiece holder of the plurality of workpiece holders after causing the one workpiece holder to hold the workpiece;

evaluate the plurality of generated holding posture candidates based on the index including whether or not at least one of the robot arm or the hand interferes with the surrounding object;

generate a movement path for a holding posture selected from among the plurality of evaluated holding posture candidates; and

cause the another workpiece holder to hold the workpiece along the generated movement path.

*FIG.1*

*FIG.2*

*FIG.3*

*FIG.4*

## FIG.5

CONTROL DEVICE ⌒50

⌒51

INFORMATION
ON HAND

INFORMATION
ON HAND

⌒52 HOLDING
POSTURE
CANDI-
DATES

HOLDING
POSTURE
CANDIDATE
GENERATOR

⌒53

HOLDING
POSTURE
EVALUATOR

HOLDING
POSTURE

⌒54

MOVEMENT
PATH
GENERATOR

THREE-DIMENSIONAL
COORDINATES OF
WORKPIECE

MOVEMENT
PATH

FIG.6

(A)

(B)

(C)

*FIG.7*

(A)

(B)

(C)

*FIG.8*

(A)

(B)

*FIG.9*

(A)

(B)

FIG.10

FIG.11

```
              ┌─────────┐
              │  START  │
              └────┬────┘
                   ↓
        ┌──────────────────────┐
        │   IMAGE WORKPIECE     │──⌐ S1
        └──────────┬───────────┘
                   ↓
        ┌──────────────────────┐
        │  GENERATE HOLDING     │──⌐ S2
        │  POSTURE CANDIDATES   │
        └──────────┬───────────┘
                   ↓
            ╱──────────────────╲
  YES ─────╱   INTERFERE WITH    ╲──⌐ S3
           ╲ SURROUNDING OBJECTS ╱
            ╲        ?          ╱
             ╲─────────┬──────╱
                   ↓ NO
        ┌──────────────────────┐
        │  EVALUATE HOLDING     │──⌐ S4
        │     POSTURES          │
        └──────────┬───────────┘
                   ↓
        ┌──────────────────────┐
        │ GENERATE MOVEMENT PATH│──⌐ S5
        └──────────┬───────────┘
                   ↓
              ┌─────────┐
              │   END   │
              └─────────┘
```

FIG.12

(A)

(B)

(C)

(D)

(E)

EP 4 286 111 A1

*FIG.13*

*FIG.14*

— no

*FIG.15*

*FIG.16*

FIG.17

(A)

(B)

(C)

(D)

| | **INTERNATIONAL SEARCH REPORT** | International application No. |
|---|---|---|
| | | PCT/JP2021/023171 |

**A. CLASSIFICATION OF SUBJECT MATTER**
Int. Cl. B25J13/08(2006.01)i
FI: B25J13/08 A

According to International Patent Classification (IPC) or to both national classification and IPC

**B. FIELDS SEARCHED**

Minimum documentation searched (classification system followed by classification symbols)
Int. Cl. B25J13/08

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-47505 A (TOYOTA MOTOR CORP.) 09 March 2017 | 1-10, 19-21 |
| A | (2017-03-09), paragraphs [0008]-[0073], fig. 1-7 | 11-18, 22 |
| Y | JP 2013-111726 A (SONY CORP.) 10 June 2013 (2013- | 1-10, 19-21 |
| A | 06-10), paragraphs [0024]-[0072], fig. 1-6 | 11-18, 22 |
| Y | JP 2019-155509 A (OMRON CORP.) 19 September 2019 | 3-5 |
| A | (2019-09-19), paragraphs [0028]-[0075], fig. 1-8 | 11-18, 22 |

☐   Further documents are listed in the continuation of Box C.     ☒   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02.08.2021 | 10.08.2021 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT

Information on patent family members

International application No.

PCT/JP2021/023171

| Patent Documents referred to in the Report | Publication Date | Patent Family | Publication Date |
|---|---|---|---|
| JP 2017-47505 A | 09.03.2017 | (Family: none) | |
| JP 2013-111726 A | 10.06.2013 | US 2013/0138244 A1 paragraphs [0028]-[0086], fig. 1-6 | |
| JP 2019-155509 A | 19.09.2019 | (Family: none) | |

Form PCT/ISA/210 (patent family annex) (January 2015)

**EP 4 286 111 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016132086 A